# EUROPÄISCHE PATENTSCHRIFT

(11) **EP 2 643 389 B1**
(45) Veröffentlichungstag und Bekanntmachung des Hinweises auf die Patenterteilung: **03.02.2016**
(21) Anmeldenummer: 11796933.7
(22) Anmeldetag: 24.11.2011
(51) Int. Cl.: C08J 3/28, C08K 3/34, C08J 3/20

(54) **POLYMER-NANOCOMPOSITE MIT SCHICHTMINERALIEN UND VERFAHREN ZU IHRER HERSTELLUNG**
POLYMER NANOCOMPOSITES WITH LAYERED MINERALS, AND METHOD FOR PRODUCING SAME
NANOCOMPOSITES POLYMÈRES COMPRENANT DES MINÉRAUX FEUILLETÉS ET LEUR PROCÉDÉ DE FABRICATION

(30) Priorität: 25.11.2010 DE 102010061924
(43) Veröffentlichungstag der Anmeldung: 02.10.2013
(73) Patentinhaber: Leibniz-Institut für Polymerforschung Dresden e.V., 01069 Dresden (DE)
(72) Erfinder: THAKUR, Varun, 01217 Dresden (DE); GOHS, Uwe, 01129 Dresden (DE); LEUTERITZ, Andreas, 01187 Dresden (DE); WAGENKNECHT, Udo, 04509 Krostiz (DE); HEINRICH, Gert, 30163 Hannover (DE)
(74) Vertreter: Rauschenbach, Marion
(86) Internationale Anmeldenummer: PCT/EP2011/070889
(87) Internationale Veröffentlichungsnummer: WO 2012/069564

(56) Entgegenhaltungen:
- EP-A1- 1 273 619
- EP-A1- 1 359 196
- EP-A1- 1 818 360
- WO-A1-2006/045641
- DE-A1- 10 002 992
- GB-A- 897 305
- GB-A- 2 093 760
- US-A- 3 957 719
- US-A- 4 550 056
- US-A1- 2007 055 005
- NASKAR K., GOHS U., WAGENKNECHT U. , HEINRICH G.: "PP-EPDM thermoplastic vulcanisates (TPVs) by electron induced reactive processing", EXPRESS POLYMER LETTERS, vol. 3, no. 11, 1 November 2009 (2009-11-01), pages 677-683,
- ROOJ S., THAKUR V., GOHS U., WAGENKNECHT U., BHOWMICK A.K., HEINRICH G.: "In situ reactive compatibilization of polypropylene/epoxidized natural rubber blends by electron induced reactive processing: novel in-line mixing technology", POLYMERS ADVANCED TECHNOLOGIES, vol. 22, 30 July 2010 (2010-07-30), pages 2257-2263,

## Beschreibung

Die Erfindung bezieht sich auf die Gebiete der Chemie und der Verfahrenstechnik und betrifft ein Verfahren zur Herstellung von Polymer-Nanocompositen mit Schichtmineralien, wie sie beispielsweise in der Autoindustrie, im Fahrzeugbau, in der Elektroindustrie, als Leichtbauwerkstoff und Kabelisolationsmaterial eingesetzt werden können.

Materialeigenschaften können durch die Kombination polymerer Materialien mit organischen sowie anorganischen Komponenten gezielt verändert werden [H. S. Katz; J. V. Meilwski "Handbook of Fillers" 1987, Van Nostrand Reinhold, New York; G. Aumayr Kunststoffberater 1989, 4, 63]. Dies ist möglich durch Mischen mehrerer Polymere (Polymerblends) sowie Mischen von Polymeren mit anorganischen oder organischen Füll- oder Verstärkungsstoffen (Hybridverbunde, Komposite und Nanocomposite). In den letzten Jahren gewinnen neben den klassischen Füllstoffen, wie Talk, Ruß, Kreide und Quarz, verstärkt auch nano-dimensionale Füllstoffe (Nanofüllstoffe) an Bedeutung. Diese Nanofüllstoffe besitzen im Vergleich zu den klassischen Füllstoffen eine größere verfügbare und wirksame Oberfläche. Ein so modifiziertes Polymer wird nicht mehr als "Bulk"-Polymer sondern als "Grenzflächen"-Polymer bezeichnet.

Der Einsatz funktioneller Nanofüllstoffe in geringen Konzentrationen beeinflusst z. B. die mechanischen Eigenschaften [Gerhard Lagaly: Appl. Clay Sci. 1999, 15, 1-9], die Flammhemmung [J. W. Gilman; Appl. Clay Sci. 1999, 15, 31-49], die thermische Stabilität [J. W. Gilman: Appl. Clay Sci. 1999, 15, 31-49], die Barrierewirkung [M. Alexandre et al: Mat. Sci. Eng. 2000, 28, 1-63], die UV-Stabilität [Y. Kojima et al: J. Appl. Sci. 1993, 49, 1259-1264], die Ionenleitfähigkeit [M. B. Armand: Adv. Mater. 1990, 2, 278-284], die bakterizide Wirkung [N. S. Plachkov: Dissertation 2006, Naturwissenschaftlich-Technische Fakultät III, Universität des Saarlandes] und die Alterungsprozesse [N. S. Murthy et al: Macromolecules 1998, 31, 142-152] um mehrere Größenordnungen. So ergeben sich durch einen ca. 5 Ma.-%igen Zusatz von Nanofüllstoffen Eigenschaften, wie sie mit konventionellen Füllstoffen erst bei ca. 30 Ma.-%iger Zugabe erreicht werden. Diese geringen Zusatzmengen führen zu Vorteilen im Verarbeitungsprozess [M. K. Akkapeddi: Polymer 2000, 21, 576-585] und zu einem geringeren Gewicht bei gleichem Verstärkungsgrad.

Füllstoffe mit einem großen Aspektverhältnis (Aspektverhältnis: Längen-Durchmesser-Verhältnis) können die durch mechanischen Stress verursachte Energie besser an die Polymermatrix abführen. Schichtsilikate besitzen dafür ein sehr gutes, großes Aspektverhältnis und wurden deshalb bereits Ende der achtziger Jahre zur Herstellung von Schichtsilikat-Nanocompositen eingesetzt [US 4,739,007 B1; US 4,810,734 B1]. Darüber hinaus besitzen sie eine einzigartige Funktionalität, wie z. B. mechanische Eigenschaften, Flammhemmung, thermische Stabilität, Barrierewirkung, UV-Stabilität, Ionenleitfähigkeit, bakterizide Wirkung, Alterungsstabilität [B. Hoffmann; Dissertation 2000; Fakultät für Chemie und Pharmazie, Albert-Ludwigs-Universität Freiburg i. Br].

Zur Gruppe der Schichtsilikate gehören neben Glimmer, Talk und Kaolin weitere Mineralien mit ähnlichem Aufbau, die aber eine ladungstragende Zwischenschicht besitzen. Schichtsilikate sind aus [SiO₄]-Tetraeder- und [M(O,OH)₆]-Oktaederschichten (M: Metall) aufgebaut. Sie werden nach der Anzahl der Tetraeder- und Oktaederschichten sowie nach der Besetzung der Oktaederplätze unterschieden. Zwei Tetraederschichten (T) sind mit einer Oktaederschicht (O) verknüpft. Der Großteil der T-O-T Dreischichtsilikate besitzt eine Negativladung, wobei auch ungeladene Dreischichtsilikate (z. B. Talk) bekannt sind. Diese negative Ladung entsteht z. B. bei Montmorillonit (MMT) durch die Substitution von dreiwertigen mit zweiwertigen Kationen. Durch die negative Gesamtladung der Schichtsilikate werden im Zwischenschichtbereich Alkali- oder Erdalkalimetalle eingelagert.

Viele Schichtsilikate sind in wässrigen Lösungen dispergier- und quellbar. Das rheologische Verhalten solcher Dispersionen wird durch verschiedene Arten von Wechselwirkungen zwischen den Kanten und Flächen der Mineralteilchen bestimmt [W.-M. Kulicke "Fließverhalten von Stoffen und Stoffgemischen", Hüthig & Wepf Verlag Basel, 1986, Heidelberg, New York, S.147ff]. Entscheidend für die Bildung einer solchen Dispersion oder verdünnten Lösung ist das Vorhandensein solvatisierbarer Ionen in dem Silikat-Zwischenschichtverband. Einwertige austauschfähige Kationen können aus dem Verband hinaus gelöst werden und es entsteht eine reine diffuse, kolloidale Dispersion. Diese Eigenschaft basiert auf elektrostatischen Abstoßungen und Van-der-Waals-Kräften zwischen den Flächen der Silikatplättchen. Der Abstand zwischen den einzelnen Silikatplättchen kann in verdünnten Lösungen sehr groß werden.

Die Herstellung eines homogenen Nanocomposites erfordert das Einbringen (Interkalation) eines Polymers in die Zwischenschicht der Schichtsilikate. Dazu müssen Schichtsilikat und Polymer miteinander kompatibel [E. P. Giannelis et al: Adv. Polym. Sci. 1999, 138, 107-147] und der Schichtabstand der Silikate muss größer als der Gyrationsradius (Maß für die räumliche Ausdehnung des Moleküls) des in die Zwischenschicht einzubringenden Polymers sein [C. K. Koo et al: J. Appl. Polym. Sci. 2003, 88, 1526]. Zur Herstellung von Schichtsilikat-Nanocompositen kommen je nach Polymertyp verschiedene Methoden zum Einsatz. So wird z. B. die Lösungsinterkalation bei gut wasserlöslichen Polymeren angewendet [D. J. Greenland; J. Colloid Sci. 1963], während nur in organischen Lösungsmitteln lösliche Polymersysteme den Einsatz von organophilen Schichtsilikaten erfordern [Y. Yang et al: Polymer 1999, 49, 4407]. Dazu werden z. B. die austauschfähigen Alkalimetallionen der Schichtsilikate durch Ammonium-, Phosphonium- oder Sulfoniumionen mit langen aliphatischen Gruppen ausgetauscht. Bei unpolarem Polypropylen ist zusätzlich der Einsatz eines Phasenvermittlers notwendig [D. R. Paul, S. Newman; "Polymer Blends" 1979, vol. 1, New York: Academic Press]. Eine weitere Herstellungsmöglichkeit bietet die In-situ-Polymerisation [D. Kaempfer; Dissertation 2004; Fakultät für Chemie und Pharmazie, Albert-Ludwigs-Universität Freiburg i. Br].

Die einfachste Methode stellt die Interkalation im Schmelzemischprozess dar. Dabei kommen organophiles Schichtsilikat und auf Grund der erforderlichen Scher- und Dehnspannung bevorzugt Doppelschneckenextruder [H. R. Dennis et al: Polymer 2001, 42, 9513-9522] mit abgestimmten Knet-, Dispergier-, Förder- und Rückförderelementen zum Einsatz [T. D. Fornes et al: Polymer 2001, 42, 9929-9940].

Ausgehend von polymerwerkstofflichen Erkenntnissen ist für eine optimale Eigenschaftsverbesserung eine homogene, feinverteilte, vollständig aufgeschlossene und gerüstbildende Verteilung der Nanopartikel in der Polymermatrix erforderlich. Damit verbunden ist der Einsatz niedermolekularer Polymere (sogenannter Modifizierungsadditive), die zu schlechteren mechanischen und anderen Eigenschaften (z. B. Flammhemmung) führen (F. R. Costa: Mg-Al Layered Double Hydroxide: A Potential Nanofiller and Flame-Retardant for Polyethylene, Dissertation, TU Dresden 2007). Ursache für diese unerwünschten Effekte ist der hohe Anteil an Modifizierungsadditiven (ca. 30 ... 60 Ma.-%).

Die Ver- und Zerteilung von Schichtmineralien mit ladungstragenden Zwischenschichten (z. B. Schichtsilikatplättchen/Layered Double Hydroxide - LDH) während des Schmelzemischvorganges erfordert somit die Vergrößerung des Zwischenschichtabstandes zwischen den Plättchen und eine möglichst gute Benetzung der Schichtsilikatplättchen durch das Polymer.
- Die Vergrößerung des Zwischenschichtabstandes wird beispielsweise erreicht durch langkettige alkylorganische Ionen oder durch Solventien, die zur Quellung von Schichtsilikaten führen (DE100 02 992 A1; Hasegawa: Polymer 44 (2003) 2933 - 2937). Dabei muss die Größe der Zwischenschicht das Eindringen von Polymeren ermöglichen. Eine weitgehende Exfolierung der Schichtsilikate wird erfahrungsgemäß dann erreicht, wenn der Schichtabstand größer gleich 1,8 nm ist. Dieser Schichtabstand entspricht z. B. einer Schichtstruktur aus 2 Alkylketten und der Silikatschicht (G. Lagaly, et al: Kolloid-Z. u. Z. Polymere 1971, 243, 48-55.; K. Jasmund, G. Lagaly, Tonminerale und Tone, Steinkopff Verlag Darmstadt, 1993.)
- Während des Schmelzemischens ist die Benetzung der Schichtsilikatplättchen durch das Polymer erforderlich, um im Scher- und Dehnfeld Kräfte übertragen zu können, die im Größenmaßstab des Schichtabstandes wirksam werden und zu einer Ver- und Zerteilung von Schichtsilikatplättchen führen (D. R. Paul, et al. Polymer 42 (2001) 9513-9522; Yakemoto et al: Polymer Engineering and Science 46/8 (2006) 1040-1050). Eine gute Benetzung ist nur bei ähnlichen Oberflächenenergien möglich. Dies kann z. B. durch eine organische Modifizierung erreicht werden.

Beide Forderungen werden mit Hilfe einer organischen Modifizierung erfüllt. Diese ermöglicht das Eindringen von Polymeren in die Zwischenschicht und darüber hinaus die erforderliche Anpassung der Oberflächenenergien. Nachteilig ist dabei der Einsatz niedermolekulare Additive (ca. 30 ... 60 Ma.-%) und somit eine teilweise Beeinträchtigung der Compositeigenschaften.

Weiterhin sind Verfahren zur Polymermodifizierung mit energiereichen Elektronen bekannt, wie beispielsweise die Vernetzung von Polymeren (z. B. Thermoplaste, Elastomere), die Härtung von Reaktivharzsystemen zur Herstellung von Faser-Polymermatrix-Formteilen und die Funktionalisierung von PTFE. Diese Anwendungen beruhen z. T. auf einem räumlich und zeitlich präzisen Energieeintrag mittels energiereicher Elektronen zur Erzeugung angeregter Atome oder Moleküle sowie Ionen, die bevorzugt Radikale bilden und komplexe chemische Reaktionen induzieren. Im Ergebnis entsteht ein Polymer mit veränderten chemischen, elektrischen, mechanischen und thermischen Eigenschaften (A. Charlesby, Proc. Roy. Soc. A, 1952, vol. 215, pp. 187-214).

Die Vernetzung von Thermoplasten, Reaktivharzen und Elastomeren mittels energiereicher Elektronen ist bekannt und erfolgt bisher ausschließlich unter stationären Bedingungen, das heißt am fertigen Formteil. Vorteile der Vernetzung mit energiereichen Elektronen sind die Möglichkeit der Fertigung großer Bauteile ohne den Einsatz eines Autoklaven, eine erhöhte Energieeffizienz von bis zu 70 % (gegenüber dem thermischen Prozess), geringe Gasemission, kürzere Härtungszeiten, der Verzicht auf zusätzliche Radikalbildner und die Möglichkeit der vollständigen Einbindung der verwendeten Materialien in das Netzwerk (Abaris, EB Curing Technology, Las Vegas, 1994; Norris, R., EB Curing of Composites Workshop, 1996).

In Publikationen (A. H. Munhoz et al. Advances in Science and Technology Vol. 71(2010) 28 - 33; A. Mirza POLYMER ENGINEERING AND SCIENCE (2010) 2131 - 2142) wird die Nutzung energiereicher Elektronen oder Gammastrahlung zur Herstellung von Nanocompositen im Festkörperzustand beschrieben. Dabei zielt der Einsatz ionisierender Strahlung z. B. auf eine Vernetzung der elastomeren Phase, hier EPDM. Darüber hinaus werden organisch modifizierte Schichtmineralien oder nanoskalige Partikel eingesetzt.

K. Naskar et al. (eXPRESS Polymer Letters Vol.3, No.11 (2009) 677 - 683) und S. Rooj et al. (Polym. Adv. Technol. (2010)) beschreiben ein neues Verfahren, die Elektronen induzierte reaktive Aufbereitung, das unter Verwendung unmodifizierter Ausgangsmaterialien und bei Bedarf unter Nutzung von Kopplungsadditiven mit Hilfe eines zeitlich und räumlich exakt steuerbaren Energieeintrages durch energiereiche Elektronen unter den dynamischen Bedingungen des Schmelzemischprozesses eine *in-line* Funktionalisierung, *in-line* Kopplung und *in-line* Vernetzung ermöglicht.

Nachteilig bei den bekannten Lösungen ist, dass bisher keine Polymer-Nanocomposite mit Schichtmineralen beschrieben sind, die mit geringen Anteilen an Additiven zur Realisierung der Interkalation der Schichtminerale die gewünschten Eigenschaften aufweisen oder gar auf derartige Additive ganz verzichten können. Verfahren zur Herstellung derartiger Materialien sind daher auch nicht bekannt.

Die Aufgabe der vorliegenden Erfindung besteht in der Angabe eines Verfahrens zur Herstellung von Polymer-Nanocompositen mit Schichtmineralien, welches gut steuerbar ist und kostengünstig durchgeführt werden kann.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Herstellung von Polymer-Nanocompositen mit Schichtmineralien werden als Ausgangsstoffe die Polymermaterialien mit Schichtmineralien und mit maximal 10 Ma.-% Additiven, wobei diese Additive funktionelle Gruppen zur Kopplung der Polymermatrix an die Schichtmineralien enthalten, gemeinsam oder nacheinander gemischt und die schmelzbaren Materialien in den geschmolzenen Zustand überführt, oder zuerst die schmelzbaren Materialien der Ausgangsstoffe aufgeschmolzen und die verbleibenden Ausgangsstoffe der Schmelze einzeln oder gemeinsam zugegeben, und diese Materialien werden dann Scher- und/oder Dehnbeanspruchungen ausgesetzt, wobei mindestens vor oder während des Einbringens von Scher- und/oder Dehnbeanspruchungen die Materialien einer energiereichen Strahlung aus gleich geladenen Teilchen ausgesetzt werden.

Vorteilhafterweise werden als Schichtmineralien MMT, LDH, Bentonit, Saponit, Hydrotalcit, Hektorit, Vermicolit oder Mica eingesetzt.

Ebenfalls vorteilhafterweise werden als Additive, die funktionelle Gruppen zur Kopplung der Polymermatrix an die Schichtmineralien enthalten, Triethoxy (vinyl) Silan, Tris(2-methoxyethoxy) vinyl Silane und Methacryloxymethyltriethoxy Silan eingesetzt.

Weiterhin vorteilhafterweise werden die Scher- und/oder Dehnbeanspruchungen durch einen Extruder, Kneter oder Dehnungsmischer realisiert.

Und auch vorteilhafterweise wird die energiereiche Strahlung direkt vor und/oder während dem Aufbringen der Scher- und/oder Dehnbeanspruchungen realisiert.

Von Vorteil ist es auch, wenn als energiereiche Strahlung Elektronen eingesetzt werden, wobei noch vorteilhafterweise Elektronen mit einer Energie von < 10 MeV eingesetzt werden.

Ebenfalls von Vorteil ist es, wenn die energiereiche Strahlung realisiert wird, während sich das Material in einer reaktiven Gasumgebung oder an Luft befindet.

Und auch von Vorteil ist es, wenn der Eintrag an energiereicher Strahlung mit Dosiswerten von 2 kGy bis 4000 kGy realisiert wird.

Die erfindungsgemäß hergestellten Polymer-Nanocomposite mit organisch nicht modifizierten Schichtmineralien bestehen aus einer Polymermatrix mit darin bis zur vollständigen Exfolierung dispers verteilten Schichten von Schichtmineralien, die kovalent über funktionelle Gruppen mit der Polymermatrix gekoppelt sind, wobei maximal 10 Ma.-% an organischen Additiven zur Realisierung der Polymer-Schichtsilikat-Kopplung eingesetzt sind.

Vorteilhafterweise besteht die Polymermatrix aus Polyethylen, Polypropylen, Polyamid und/oder Polyester.

Weiterhin vorteilhafterweise sind die Schichten der Schichtminerale über Reaktionen mit OH- und C=C-Gruppen mit der Polymermatrix gekoppelt.

Ebenfalls vorteilhafterweise sind bis 5 Ma.-% an organischen Additiven zur Realisierung der Exfolierung der Schichtsilikate vorhanden, wobei noch vorteilhafterweise keine organischen Ionen in die Mineralschicht der Schichtsilikate interkaliert sind.

Mit der erfindungsgemäßen Lösung wird es erstmals möglich, Polymer-Nanocomposite mit Schichtmineralien herzustellen, die mit Verzicht der Zugabe organischer Additive vergleichbare gute bis verbesserte Werkstoffeigenschaften zeigen. Derartige organische Additive sind nach dem Stand der Technik zur Realisierung der Interkalation in den Schichtmineralien notwenig, um in die Zwischenschicht der Schichtminerale einzudringen (Interkalation) und dadurch die Wechselwirkungskräfte in der Zwischenschicht zu schwächen, so dass eine Exfolierung, das heißt eine räumliche Trennung der Schichten der Schichtminerale, erreicht wird.

Erfindungsgemäß kann auf den Anteil an den sogenannten Modifizierungsadditiven zur Schwächung der Wechselwirkungskräfte in der Zwischenschicht von Schichtmineralien verzichtet werden, wodurch dann keine niedermolekularen Stoffe im Polymer-Nanocomposit vorliegen. Trotzdem wird erfindungsgemäß eine homogene, feinverteilte und aufgeschlossene Verteilung der Schichten in der Polymermatrix erreicht.

Dies wird durch die erfindungsgemäße Bestrahlung der Materialien mit energiereicher Strahlung mindestens während die Polymermatrix im geschmolzenen Zustand vorliegt und bevor oder während Scher- und/oder Dehnbeanspruchungen auf das Material ausgeübt werden, erreicht. Dadurch kann die Werkstoffmorphologie (z. B. Aufschluss und Verteilung der Schichten, Phasenkopplung sowie Funktionalisierung der Polymermatrix) mit Hilfe eines zeitlich und räumlich exakt steuerbaren Energie- und Ladungseintrages energiereicher Strahlung und insbesondere energiereicher Elektronen unter den dynamischen Bedingungen des Schmelzemischprozesses, das heißt den Scher- und Dehnfeldern, in angepasster Gasatmosphäre positiv beeinflusst werden.

Als Polymermatrixmaterialien können insbesondere
a) Thermoplast-Nanocomposite mit nicht vernetzender Thermoplastmatrix (z. B. PP)
b) Thermoplast-Nanocomposite mit vernetzender Thermoplastmatrix (z. B. PE)
c) TPE-Nanocomposite (z. B. PP/ENR, PP/EPDM, PP/NR, PP/EOC)
d) TPV-Nanocomposite (z. B. PP/ENR, PP/EPDM, PP/NR, PP/EOC) eingesetzt werden.

Erfindungsgemäß werden die Ausgangsmaterialien
- Polymere (siehe a) bis d)),
- Schichtmineralien und
- Additive (maximal 10 Ma.-%), die funktionelle Gruppen zur Kopplung der Polymermatrix an die Schichtmineralien enthalten
gemischt und gegebenenfalls noch weitere, an sich bekannte Additive, wie Farbstoffe, Pigmente usw. zugegeben.
Die Ausgangsstoffe können vorab einzeln oder gemeinsam gemischt und dann alle schmelzbaren Materialien aufgeschmolzen werden, oder es ist auch möglich, dass erst die schmelzbaren Materialien aufgeschmolzen werden und dann die weiteren Ausgangsstoffe einzeln oder als gemeinsame Mischung zugegeben werden.
Diese Ausgangsstoffe können zusammen mit der Polymermatrix, beispielsweise in einem Extruder oder Kneter, gemischt und nachfolgend wird die Polymermatrix aufgeschmolzen werden. Als schmelzflüssiger Zustand soll im Rahmen dieser Erfindung der Zustand der Polymermatrix (Ausgangsstoffe - es werden alle schmelzbaren Komponenten aufgeschmolzen, die Nanocomposite sind nicht schmelzbar und die Additive liegen oft im flüssigen Zustand vor) verstanden werden, den sie während des Schmelzemischprozesses nach dem Stand der Technik üblicherweise erreichen, dass heißt, es muss kein weiterer Temperatureintrag in den vorhandenen Herstellungsprozess erfolgen.

In diesem Zustand der Mischung der Materialien wird eine Scher- und/oder Dehnbeanspruchung auf die Materialmischung aufgebracht. Vor und/oder während der Aufbringung der Scher- und/oder Dehnbeanspruchung erfolgt die Bestrahlung der Materialmischung mit einer energiereichen Strahlung, vorteilhafterweise mit energiereichen Elektronen. Dabei erfolgt der Energie- und Ladungseintrag mittels energiereicher Elektronen vorteilhafterweise erst dann, wenn sich die Ausgangsstoffe im Bereich der Scher- und Dehnfelder des Schmelzemischprozesses befinden.
Mittels der Bestrahlung werden energiereiche Teilchen gleicher Ladung in die Schichtmineralien eingebracht.

Ein Vorteil des erfindungsgemäßen Verfahrens ist es, dass durch die erfindungsgemäße Lösung in den bisherigen Herstellungsprozess von an sich bekannten Polymer-Nanocompositen kein zusätzlicher Prozessschritt eingeführt wird, sondern durch den zeitlich und räumlich exakt steuerbaren Energie- und Ladungseintrag chemische Reaktionen z. B. zur Funktionalisierung der Polymermatrix und zur Kopplung von nicht organisch modifiziertem Schichtmineral und Polymermatrix induziert sowie die Wechselwirkungskräfte in der Zwischenschicht der nicht organisch modifizierten Schichtmineralien geschwächt werden.

Ein weiterer Vorteil der erfindungsgemäßen Lösung besteht darin, dass unmodifizierte Ausgangsmaterialien eingesetzt sowie Polymerradikale oder Elektronenladungen temperaturunabhängig in einem exakt wählbaren Behandlungsgebiet innerhalb der Materialmischung und/oder im Herstellungsprozess entsprechend den Erfordernissen der gewünschten chemischen Reaktion und/oder des Schmelzemischprozesses erzeugt oder eingetragen werden können. Dies bedeutet, dass die chemische Reaktion und/oder die Schwächung der Wechselwirkungskräfte in der Zwischenschicht der nicht organisch modifizierten Schichtmineralien nur in einem gezielt gewählten Gebiet innerhalb der Schmelzemasse ausgelöst oder eingebracht werden kann, das bevorzugt im Bereich der hohen Scher- und Dehnfelder des Schmelzemischprozesses liegt.

Dabei ist es erfindungsgemäß vorteilhaft, wenn der Energie- und Ladungseintrag im Schmelzemischprozess mit einer dem zu modifizierenden System, insbesondere den nicht organisch modifizierten Schichtmineralien und der Polymermatrix, angepassten Dosis (Dosis, d. h. absorbierte Energie pro Masseneinheit) und Ladung (Ladung, d. h. Ladung pro Masseneinheit) realisiert wird. Der Energieeintrag wird dabei in Abhängigkeit von der stofflichen Zusammensetzung der Schmelze gewählt und über den Elektronenstrom und die Behandlungszeit eingestellt. Der Ladungseintrag wird den aufzuschließenden nicht organisch modifizierten Schichtmineralien angepasst und über die Elektronenenergie, den Elektronenstrom und die Behandlungszeit gesteuert. Somit sind beide verfahrenstechnisch relevanten Parameter voneinander unabhängig einstellbar. Das bedeutet, die erforderliche Kompatibilisierung der Ausgangsmaterialien wird über die absorbierte Dosis eingestellt. Im Bedarfsfall kann der Energie- und Ladungseintrag in einer reaktiven Gasumgebung und/oder an Luft erfolgen, um die Bildung der erforderlichen funktionellen Gruppen zu unterstützen. Der spezifische Ladungseintrag in nicht organisch modifizierte Schichtmineralien (z. B. MMT, LDH) steuert die Schwächung der Wechselwirkung in der Zwischenschicht und somit den Aufschluss und die Verteilung der Schichten.

Mit den nach dem Stand der Technik bekannten kompakten und leistungsfähigen Elektronenbeschleunigern ergibt sich die Möglichkeit, Polymermischprozess und Polymermodifizierung mit energiereichen Elektronen unter den dynamischen Bedingungen des Schmelzemischprozesses von Polymer-Nanocompositen zu kombinieren, sowie einen kompakten Anlagenaufbau inklusive Abschirmung und die Integration in die Fertigungslinie in den verschiedensten technischen Bereichen zu realisieren.

Die Wirkungsweise der vorliegenden Erfindung besteht im Wesentlichen darin, dass durch die Bestrahlung mit energiereicher Strahlung aus gleich geladenen Teilchen Ladungen mit gleichem Vorzeichen in das Material eingebracht werden. Dies betrifft sowohl die Schichten der Schichtmineralien als auch die Zwischenschichten. Aufgrund der Kristallinität der Schichtmaterialien verbleiben die Ladungen in den Schichtmaterialien so lange, bis einerseits ein genügend hohes Ladungspotential aufgebaut ist, welches ausreicht, dass unter den Scher- und/oder Dehnbeanspruchungen eine möglichst vollständige Exfolierung der Schichten der Schichtmineralien erreicht wird. Dadurch ist es erfindungsgemäß besonders vorteilhaft, die Bestrahlung möglichst kurz vor oder während der Einwirkung der Scher- und/oder Dehnbeanspruchungen durchzuführen.

Durch den Eintrag von Ladungen gleichen Vorzeichens wird erreicht, dass sich die Schichten voneinander abstoßen, was auch durch den Eintrag von Ladungen mit diesem Vorzeichen in die Zwischenschicht zwischen die Schichten der Schichtmineralien unterstützt wird. Dabei ist es prinzipiell egal, ob nur positive oder nur negative Ladungen eingebracht werden. Es ist jedoch auch vorteilhaft, wenn Ladungen mit dem Vorzeichen eingebracht werden, die gegebenenfalls bereits in einem Schichtmineral vorhanden sind. Diese Abstoßung der Schichten durch gleiche Ladung schwächt die Kräfte, die die Schichten zusammenhalten und führt im Zusammenhang mit den Scher- und/oder Dehnbeanspruchungen dann zur Exfolierung der Schichten.

Nachfolgend wird die Erfindung an mehreren Ausführungsbeispielen näher erläutert.

### Beispiel 1

88,2 Ma.-% Polypropylen-Homopolymer, 6,8 Ma.-% Tris(2-methoxyethoxy)vinyl Silan und 5 Ma.-% unmodifiziertes getrocknetes dioktaedrisches Drei-Schicht-Silikat (Montmorillonit: (Al,Mg,Fe)₂[(OH)₂|Si₄O₁₀] ·(Na,Ca)_{0.3}(H₂O)*n*)) werden bei 180 °C in einer Knetkammer aufgeschmolzen und 14 min gemischt. Es wurden keine organischen Kationen für den Ionenaustausch in der Zwischenschicht eingesetzt. Unmittelbar vor dem Eintrag von Scher- und/oder Dehnspannungen in die Schmelze wird unter folgenden Bedingungen die Bestrahlung mit Elektronen in einer Haake-Knetkammer durchgeführt:

| | |
|---|---|
| Rotordrehzahl [Umdrehung/Min.] | : 60 |
| Elektronenenergie [MeV] | : 0,6 |
| Behandlungszeit [s] | : 300 (Minute 8 bis 13) |
| absorbierte Dosis [kGy] | : 50 |
| Gasatmosphäre | : Luft |

Unmittelbar nach der Bestrahlung erfolgt der Eintrag von Scher- und Dehnbeanspruchungen unter den Bedingungen der Bestrahlung.

Anschließend wird das Polymer-Nanocomposit zu einem Prüfkörper verarbeitet, um nachfolgende Eigenschaften zu ermitteln.

| | |
|---|---|
| Scherverdünnungsexponent | : 0,42 |
| Änderung des Schichtabstandes | : 0,56 nm |

Im Röntgenstreuexperiment wurde eine Vergrößerung des Schichtabstandes um 0,56 nm festgestellt. In scherrheologischen Untersuchungen analog der Methode von Wagener und Reisinger (Polymer 2003) wurde eine Steigerung des Scherverdünnungsexponenten von 0,1 auf 0,42 ermittelt. Diese Daten belegen eine Exfolierung des Schichtminerals.

### Beispiel 2

88,2 Ma.-% Polypropylen-Homopolymer, 3,4 Ma.-% Methacryloxymethyltriethoxy Silan und 5 Ma.-% unmodifiziertes hydratisiertes dioktaedrisches Drei-Schicht-Silicat (Montmorillonit: (Al,Mg,Fe)₂[(OH)₂|Si₄O₁₀] ·(Na,Ca)_{0.3}(H₂O)*ₙ*) werden bei 180 °C in einer Knetkammer aufgeschmolzen und 14 min gemischt. Es wurden keine organischen Kationen für den Ionenaustausch in der Zwischenschicht eingesetzt. Unmittelbar vor dem Eintrag von Scher- und/oder Dehnspannungen in die Schmelze wird unter folgenden Bedingungen die Bestrahlung mit Elektronen in einer Haake-Knetkammer durchgeführt:

| | |
|---|---|
| Rotordrehzahl [Umdrehung/Min.] | : 60 |
| Elektronenenergie [MeV] | : 0,6 |
| Behandlungszeit [s] | : 300 (Minute 8 bis 13) |
| absorbierte Dosis [kGy] | : 76 |
| Gasatmosphäre | : Luft |

Unmittelbar nach der Bestrahlung erfolgt der Eintrag von Scher- und Dehnbeanspruchungen unter den Bedingungen der Bestrahlung.

Anschließend wird das Polymer-Nanocomposit zu einem Prüfkörper verarbeitet, um nachfolgende Eigenschaften zu ermitteln.

| | |
|---|---|
| Scherverdünnungsexponent | : 0,91 |
| Änderung des Schichtabstandes | : 0,27 nm |

Im Röntgenstreuexperiment wurde eine Vergrößerung des Schichtabstandes um 0,27 nm festgestellt. In scherrheologischen Untersuchungen analog der Methode von Wagener und Reisinger (Polymer 2003) wurde eine Steigerung des Scherverdünnungsexponenten von 0,1 auf 0,91 ermittelt. Diese Daten belegen eine Exfolierung des Schichtminerals.

### Beispiel 3

88,2 Ma.-% Polypropylen-Homopolymer, 3,4 Ma.-% Methacryloxymethyltriethoxy Silan und 5 Ma.-% unmodifiziertes trioktaedrischer Smectit Hektorit Na_{0.7}[Li_{0.7}Mg_{5.3}Si₈O₂₀(OH)₄] werden bei 180 °C in einer Knetkammer aufgeschmolzen und 14 min gemischt. Es wurden keine organischen Kationen für den lonenaustausch in der Zwischenschicht eingesetzt. Unmittelbar vor dem Eintrag von Scher- und/oder Dehnspannungen in die Schmelze wird unter folgenden Bedingungen die Bestrahlung mit Elektronen in einer Haake-Knetkammer durchgeführt:

| | |
|---|---|
| Rotordrehzahl [Umdrehung/Min.] | : 60 |
| Elektronenenergie [MeV] | : 0,5 |
| Behandlungszeit [s] | : 300 (Minute 8 bis 13) |
| absorbierte Dosis [kGy] | : 100 |
| Gasatmosphäre | : Luft |

Unmittelbar nach der Bestrahlung erfolgt der Eintrag von Scher- und Dehnbeanspruchungen unter den Bedingungen der Bestrahlung.

Anschließend wird das Polymer-Nanocomposite zu einem Prüfkörper verarbeitet, um nachfolgende Eigenschaften zu ermitteln.

| | |
|---|---|
| Scherverdünnungsexponent | : 0,51 |
| Änderung des Schichtabstandes | : 0,32 nm |

Im Röntgenstreuexperiment wurde eine Vergrößerung des Schichtabstandes um 0,32 nm festgestellt. In scherrheologischen Untersuchungen analog der Methode von Wagener und Reisinger (Polymer 2003) wurde eine Steigerung des Scherverdünnungsexponenten von 0,1 auf 0,51 ermittelt. Diese Daten belegen eine Exfolierung des Schichtminerals.

## Patentansprüche

1. Verfahren zur Herstellung von Polymer-Nanocompositen mit Schichtmineralien, bei dem als Ausgangsstoffe die Polymermaterialien mit Schichtmineralien und mit maximal 10 Ma.-% Additiven, wobei diese Additive funktionelle Gruppen zur Kopplung der Polymermatrix an die Schichtmineralien enthalten, gemeinsam oder nacheinander gemischt und die schmelzbaren Materialien in den geschmolzenen Zustand überführt werden, oder zuerst die schmelzbaren Materialien der Ausgangsstoffe aufgeschmolzen und die verbleibenden Ausgangsstoffe der Schmelze einzeln oder gemeinsam zugegeben werden, und diese Materialien Scher- und/oder Dehnbeanspruchungen ausgesetzt werden, wobei mindestens vor oder während des Einbringens von Scher- und/oder Dehnbeanspruchungen die Materialien einer energiereichen Strahlung aus gleich geladenen Teilchen ausgesetzt werden.

2. Verfahren nach Anspruch 1, bei dem als Schichtmineralien MMT, LDH, Bentonit, Saponit, Hydrotalcit, Hektorit, Vermicolit, Mica eingesetzt werden.

3. Verfahren nach Anspruch 1, bei dem als Additive, die funktionelle Gruppen zur Kopplung der Polymermatrix an die Schichtmineralien enthalten, Triethoxy (vinyl) Silan, Tris(2-methoxyethoxy) vinyl Silane und Methacryloxymethyltriethoxy Silan eingesetzt werden.

4. Verfahren nach Anspruch 1, bei dem die Scher- und/oder Dehnbeanspruchungen durch einen Extruder, Kneter oder Dehnungsmischer realisiert werden.

5. Verfahren nach Anspruch 1, bei dem die energiereiche Strahlung direkt vor und/oder während dem Aufbringen der Scher- und/oder Dehnbeanspruchungen realisiert wird.

6. Verfahren nach Anspruch 1, bei dem als energiereiche Strahlung Elektronen eingesetzt werden.

7. Verfahren nach Anspruch 6, bei dem Elektronen mit einer Energie von < 10 MeV eingesetzt werden.

8. Verfahren nach Anspruch 1, bei dem die energiereiche Strahlung realisiert wird, während sich das Material in einer reaktiven Gasumgebung oder an Luft befindet.

9. Verfahren nach Anspruch 1, bei dem der Eintrag an energiereicher Strahlung mit Dosiswerten von 2 kGy bis 4000 kGy realisiert wird.

## Claims

1. Process for the production of polymer nanocomposites with layered minerals by mixing, together or in succession, as starting materials, the polymer materials with layered minerals and with at most 10% by mass of additives, where these additives comprise functional groups for the coupling of the polymer matrix to the layered minerals, and converting the fusible materials to the molten state, or first melting the fusible materials of the starting materials and adding the remaining starting materials, individually or together, to the melt, and exposing these materials to shear stresses and/or tensile stresses, where at least before or during the introduction of shear stresses and/or tensile stresses the materials are exposed to high-energy radiation composed of particles having the same charge.

2. Process according to Claim 1, which uses MMT, LDH, bentonite, saponite, hydrotalcite, hectorite, vermiculite or mica as layered minerals.

3. Process according to Claim 1, in which triethoxy(vinyl)silane, tris(2-methoxyethoxy)vinylsilane and methacryloxymethyltriethoxysilane are used as additives which comprise functional groups for the coupling of the polymer matrix to the layered minerals.

4. Process according to Claim 1, in which the shear stresses and/or tensile stresses are realized via an extruder or kneader or via a mixer that induces tensile stress.

5. Process according to Claim 1, in which the high-energy radiation is realized directly before and/or during the application of the shear stresses and/or tensile stresses.

6. Process according to Claim 1, in which electrons are used as high-energy radiation.

7. Process according to Claim 6, in which electrons of energy < 10 MeV are used.

8. Process according to Claim 1, in which the high-energy radiation is realized while the material is in a reactive gas environment or in contact with air.

9. Process according to Claim 1, in which the introduction of high-energy radiation is realized with dose values of from 2 kGy to 4000 kGy.

## Revendications

1. Procédé pour la production de nanocomposites de polymère avec des minéraux lamellaires, dans lequel on mélange en tant que produits de départ, ensemble ou successivement, les matériaux polymères avec des minéraux lamellaires et avec au maximum 10 % en masse d'additifs, ces additifs comportant des groupes fonctionnels destinés au couplage de la matrice polymère aux minéraux lamellaires et on met à l'état fondu les matériaux fusibles, ou d'abord on fait fondre les matériaux fusibles des produits de départ et on ajoute individuellement ou ensemble à la masse fondue les produits de départ restants, et on expose ces matériaux à des contraintes de cisaillement et/ou d'étirage, en exposant les matériaux au moins avant ou pendant l'introduction de contraintes de cisaillement et/ou d'étirage à un rayonnement à haute énergie de particules de même charge.

2. Procédé selon la revendication 1, dans lequel on utilise comme minéraux lamellaires la MMT, un LDH, la bentonite, la saponite, l'hydrotalcite, l'hectorite, la vermiculite, le mica.

3. Procédé selon la revendication 1, dans lequel on utilise comme additifs qui comportent des groupes fonctionnels destinés au couplage de la matrice polymère aux minéraux lamellaires du triéthoxy(vinyl)-silane, des tris(2-méthoxyéthoxy)vinylsilanes et du méthacryloxyméthyltriéthoxysilane.

4. Procédé selon la revendication 1, dans lequel les contraintes de cisaillement et/ou d'étirage sont réalisées par une extrudeuse, un malaxeur ou un mélangeur à étirage.

5. Procédé selon la revendication 1, dans lequel l'irradiation à haute énergie est réalisée directement avant et/ou pendant l'application des contraintes de cisaillement et/ou d'étirage.

6. Procédé selon la revendication 1, dans lequel on utilise comme rayonnement à haute énergie des électrons.

7. Procédé selon la revendication 6, dans lequel on utilise des électrons ayant une énergie de < 10 MeV.

8. Procédé selon la revendication 1, dans lequel l'irradiation à haute énergie est réalisée pendant que le matériau se trouve à l'air ou dans un environnement de gaz réactif.

9. Procédé selon la revendication 1, dans lequel l'introduction de rayonnement à haute énergie est réalisée à des doses de 2 kGy à 4 000 kGy.
